# EUROPÄISCHE PATENTSCHRIFT

(11) **EP 1 902 607 B1**
(45) Veröffentlichungstag und Bekanntmachung des Hinweises auf die Patenterteilung: **06.11.2013**
(21) Anmeldenummer: 07014466.2
(22) Anmeldetag: 24.07.2007
(51) Int. Cl.: A01C 17/00

(54) **Schleuderstreuer für Streugut**
Centrifugal spreader for spreading material
Epandeur centrifuge pour matériau d'épandage

(30) Priorität: 22.09.2006 DE 102006045284
(43) Veröffentlichungstag der Anmeldung: 26.03.2008
(73) Patentinhaber: RAUCH Landmaschinenfabrik GmbH, 76547 Sinzheim (DE)
(72) Erfinder: Doll, Franz, 76547 Sinzheim (DE); Gushurst, Hans, 76547 Sinzheim (DE); Rauch, Norbert, 77815 Bühl (DE)
(74) Vertreter: Lasch, Hartmut

(56) Entgegenhaltungen:
- DE-A1- 3 503 905
- DE-A1- 4 106 560
- DE-U1- 29 922 050

## Beschreibung

Die Erfindung betrifft einen Schleuderstreuer für Streugut mit einem Streugut-Behälter, der ein sich zu einem Boden verjüngendes trichterförmiges Unterteil und wenigstens eine im Boden angeordnete Auslauföffnung aufweist, mit einer aus einer Dosierplatte mit Dosieröffnung und einem Dosierschieber bestehenden Dosiereinrichtung und einer Verstelleinrichtung für die Dosiereinrichtung zur Verlagerung des Aufgabepunktes des Streuguts auf einer mit Wurfschaufeln besetzten Verteilerscheibe, die unterhalb des Bodens umläuft.

Ein bekannter Schleuderstreuer in Form eines Zweischeibenstreuers ist in der DE 41 34 315 A1 beschrieben. Bei diesem bekannten Streuer ist der Boden des Behälters zur Verstellung des Aufgabepunktes des Streugutes auf die Verteilerscheibe drehbar angeordnet und erfolgt die Mengenverstellung über mitgeführte Verstellsegmente. Die Aufgabepunkt-Verstellung geschieht ausschließlich über einen Aktuator. Eine manuelle Verstellung des drehbaren Behälterbodens ist nicht vorgesehen, weshalb auch eine Skala für die Aufgabepunkt-Verstellung fehlt. Die Verstelleinrichtung ist nahe der Verteilerscheibe angeordnet und dadurch dem Streugutstaub ausgesetzt. Die Anbindung der Verstelleinrichtung an den Behälter ist korrosionsgefährdet. Die Behälter bestehen nämlich in der Regel aus lackiertem Blech. Selbst wenn die Verstelleinrichtung aus korrosionsfestem Material bestehen würde, käme es aufgrund der Reibung zwischen den einzelnen Teilen der Verstelleinrichtung und dem Behälterblech zum Abtragen des Lacks, was wiederum zu Korrosion führt. Schließlich kann Streugut in den Zwischenraum zwischen dem drehbaren Boden und dem Behälter gelangen und dadurch die Verstelleinrichtung blockieren und wiederum zu Korrosion führen.

Aus der DE 196 10 335 A1 ist ein ähnlicher Schleuderstreuer bekannt, bei dem allerdings der trichterförmige Behälter in einem zylindrischen Unterteil endet, der nach unten von einem Boden mit einer Auslauföffnung abgeschlossen ist. Der Boden ist von der Antriebswelle der Verteilerscheibe durchsetzt, die ein oberhalb des Bodens angeordnetes Rührwerk antreibt. Unterhalb der Bodenplatte sind eine Dosierplatte mit einer Dosieröffnung und darunter ein Dosierschieber drehbar angeordnet. Durch Verdrehen der Dosierplatte kann der Aufgabenpunkt verstellt und durch Verdrehen des Dosierschiebers die Dosiermenge verändert werden. Die Einstellung und Festsetzung des Aufgabepunktes erfolgt mittels eines ausklinkbaren Steckbolzens, der an der Rückseite des Behälters in eine Platte eingreift. Dieser Steckbolzen ist bezüglich des Streuers von hinten relativ leicht zugänglich. Die Einstellung der Dosiermenge erfolgt mittels eines in einem konzentrischen Schlitz einer Skalenscheibe laufenden Bolzens mit einer Knebelschraube. Die Skalenscheibe ist im Raum zwischen dem zylindrischen Unterteil des Behältertrichters und dem Anbaurahmen des Schleuderstreuers angeordnet und damit nur sehr schwer zugänglich. Eine gleichzeitige Verstellung von Aufgabenpunkt und Dosiermenge, die häufig miteinander korrelieren, ist nicht möglich, vielmehr muss der Benutzer stets einen Ortswechsel vornehmen und ist auch eine skalenmäßige Korrelation nicht möglich.

Bei einem anderen bekannten Zweischeibenstreuer (Prospekt "ACCORD" der Firma Kverneland, Druckvermerk AC 750762 GB 10/04) weist der Boden drei symmetrisch verteilte Auslauföffnungen auf und sitzt darunter ein Drehschieber mit drei Öffnungen, die blendenartig mit den Auslauföffnungen zusammenwirken. Der am Behälter drehbare Boden weist einen bis in das Zentrum der Verteilerscheibe reichenden zylindrischen Schirm auf, innerhalb dessen das Streugut auf die Verteilerscheibe gelangt. Der Schirm weist wenigstens eine seitliche Austrittöffnung auf. Durch Verdrehen des Schirms bzw. der Austrittöffnung wird der Aufgabepunkt verlagert. Zum Verstellen von Dosiermenge und Aufgabepunkt dient ein Bedienungspanel, das unterhalb des Bodens liegt und damit nur schwer zugänglich ist und zudem verspritzenden Düngerpartikeln ausgesetzt ist.

Bei einem älteren, nicht veröffentlichten Vorschlag der Anmelderin (DE 10 2005 037 81.7 = EP 06012705.7) ist eine vorteilhafte Bedienung und eine funktionssichere Betriebsweise dadurch möglich, dass die Verstelleinrichtung eine etwa trichterparallel verlaufende Konsole aufweist, die mit ihrem unteren Ende in Wirkverbindung mit der Dosiereinrichtung steht und an ihrem oberen Ende ein nach außen weisendes, im wesentlichen horizontales Bedienungspanel für die Einstellung von Aufgabepunkt und Dosiermenge aufweist, wobei das Bedienungspanel mindestens 20 cm oberhalb des Bodens liegt.

Diese Ausführung, die sowohl bei Ein- als auch bei Zweischeibenstreuern gleichermaßen vorteilhaft eingesetzt werden kann, ermöglicht mit der bis auf mindestens 20 cm oberhalb des Bodens bzw. mindestens 30 cm oberhalb der Verteilerscheibe nach oben gezogenen Konsole und dem an ihrem oberen Ende angeordneten Bedienungspanel in der Betriebsstellung des Streuers eine Bedienung im Stand. Die Bedienungsperson muss sich also bei Verstellung des Aufgabepunktes oder bei Änderung der Dosiermenge nicht nach unten bükken. Es ist ferner annähernd ausgeschlossen, dass die von der Verteilerscheibe erfassten und abgeschleuderten Streugutpartikel, die nach oben wegspritzen, das Bedienungspanel erreichen und in seiner Funktion beeinträchtigen. Bei einer besonders stabilen Ausführung ist die Konsole an ihrem oberen Ende über das Bedienungspanel an einem behälterfesten Teil abgestützt und geführt.

Das Bedienungspanel ist an der Seite des Behältertrichters angebracht. Bei einem Zweischeibenstreuer liegen also die Bedienungspanels an gegenüberliegenden Seiten. Zwar ist die Bedienung der einzelnen Verstelleinrichtungen problemlos möglich, werden jedoch bei einem Zweischeibenstreuer - wie üblich - beide Dosiereinrichtungen oder auch der Aufgabepunkt für beide Scheiben verstellt, muss die Bedienungsperson von einer Seite des Streuers um den Streuer zur anderen Seite herumlaufen. Dies ist zeitaufwändig und wenig ergonomisch. Zudem bestehen die Dosiereinrichtung und die Verstelleinrichtung sowie das Bedienungspanel und die Führung desselben an der Aufgabepunkt-Skala aus einer Vielzahl von Einzelteilen, die zudem zeitaufwändig montiert werden müssen, so dass die Herstellungskosten erheblich sind.

Ein weiterer Schleuderstreuer ist aus der DE 41 06 560 bekannt.

Der Erfindung liegt die Aufgabe zugrunde, einen Schleuderstreuer der eingangs genannten und zuletzt beschriebenen Art in kostenmäßiger und bedienungstechnischer Hinsicht zu vereinfachen.

Diese Aufgabe wird erfindungsgemäß dadurch gelöst, dass die Verstelleinrichtung und die Dosiereinrichtung in Wirkverbindung mit einem im wesentlichen horizontalen Bedienungspanel für die Einstellung von Aufgabepunkt und Dosiermenge stehen, das an einer behälterfesten Aufgabepunkt-Skala an der Rückseite des Behälters geführt ist, und daß die Dosierplatte, mittels verschiebbarer Lagerschuhe am Umfang des behälterfesten Bodens drehbar gelagert ist, der zu diesem Zweck kreisbogenförmige Umfangsabschnitte aufweist, auf denen die übergreifenden Lagerschuhe gleiten.

Bei einem Einscheibenstreuer ergibt sich der Vorteil, dass keine seitlich vorstehenden Bauteile vorhanden sind und die Einstellung von Aufgabepunkt und Dosiermenge von hinten erfolgen kann. Bei einem Zweischeibenstreuer ergibt sich der zusätzliche Vorteil, dass die an der Rückseite der beiden Behältertrichter angeordneten Bedienungspanels und zugehörigen Verstelleinrichtungen nebeneinander liegen, so dass die Bedienungsperson nur wenige Schritte seitwärts ausführen muss, um die eine oder andere Verstelleinrichtung zur Verstellung des Aufgabepunktes zu bestätigen bzw. die Einstellung der Dosiermenge vorzunehmen. Die Verstelleinrichtung und das Bedienungspanel sind in einer solchen Höhe angeordnet, dass sie von dem nach hinten abgeschleuderten Streugutstrahl und eventuell verspritzenden Streugutpartikeln nicht getroffen werden.

In vorteilhafter Ausgestaltung der Erfindung ist vorgesehen, dass die Dosierplatte und der daran gelagerte Dosierschieber sowie ein mit diesem einteiliger Anschlaghebel für die Dosiermenge eine Baueinheit bildet.

Der Dosierschieber und der Anschlaghebel für die Dosiermenge bilden ein einteiliges Bauteil, das zusammen mit dem an der Dosierplatte gelagerten Dosierschieber wiederum eine geschlossene Baueinheit bildet.

Der mit dem Dosierschieber einteilige Anschlaghebel ist mit einem Führungsbolzen an seinem oberen Ende in einem Führungsschlitz des Bedienungspanels geführt, wobei in dem kreisbogenförmigen Führungsschlitz, dem eine kreisbogenförmige Skala für die Dosiermenge zugeordnet ist, ein festsetzbarer Einstellknopf zur Einstellung der gewünschten Dosiermenge vorschiebbar ist, der einen Anschlagbolzen für den Anschlaghebel aufweist. Die Dosiermenge wird an der Skala mit dem Einstellknopf voreingestellt. Für die Verstellung des Dosierschiebers ist an der Dosierplatte ein Antrieb abgestützt, der hydraulisch, pneumatisch oder elektrisch betrieben sein kann.

Der Antrieb dreht den Dosierschieber so weit um sein Lager an der Dosierplatte, bis der Anschlaghebel an den Anschlagbolzen am Einstellknopf gelangt, so dass alsdann die gewünschte Dosiermenge ausgebracht werden kann.

Dadurch, dass die Bedienungspanels und die Einstellknöpfe für die Dosiermenge bei einem Zweischeibenstreuer nebeneinander angeordnet sind, kann es bei der Einstellung der Dosiermenge anhand der in Streutabellen vorgegebenen Skalenwerte nicht zu Fehlbedienungen kommen, da die Einstellungen für die Bedienungsperson übersichtlich und leicht überprüfbar sind.

Gemäß einem weiteren Ausführungsbeispiel ist das Bedienungspanel über zwei nahe seinen Außenseiten angeordnete, nach unten reichende Flacheisen mit der Dosierplatte verbunden. Im Sinne der Einsparung von Einzelteilen sind die Flacheisen mit dem Bedienungspanel einteilig ausgebildet.

In bevorzugter Ausführungsform der Erfindung ist die Aufgabepunkt-Skala an einem bogenförmigen Kunststoff-Formstück vorgesehen, das an einem am Behälter befestigten Tragblech lösbar festgelegt ist. Die Skalierung ist dabei vorzugsweise erhaben ausgebildet.

Das Formstück erfüllt bei der erfindungsgemäßen Ausbildung noch weitere Funktionen. So bildet das Formstück an seiner Unterseite eine Rastschiene, in deren einzelne Rasten ein unter Federkraft stehender Raststift eingreift, der von der Oberseite des Bedienungspanels zur Einstellung des Aufgabepunktes betätigbar ist. Die Federkraft wird beispielsweise durch eine Blattfeder erzeugt, die an der Unterseite des Bedienungspanels befestigt ist und an ihrem freien Ende den in die Ausnehmungen der Rastschiene eingreifenden Raststift aufweist.

Mit Vorteil ist dem Raststift oberhalb des Bedienungspanels ein Druckknopf zugeorndet, der zugleich einen mit der Aufgabepunkt-Skala zusammenwirkenden Anzeiger bildet. Durch Drücken des Anzeigers wird der Raststift freigesetzt und kann das Bedienungspanel mit der Verstelleinrichtung um das Zentrum verdreht werden, so dass die Dosierplatte zusammen mit dem Dosierschieber um das Zentrum drehen und auf diese Weise der Aufgabepunkt des Streugutes auf die Streuscheibe verlagert werden kann.

An dem Bedienungspanel ist zweckmäßigerweise eine zum Benutzer hin geneigte Skala für die Dosiermenge vorgesehen, die einteilig mit dem Bedienungspanel sein kann.

Auch das Formstück weist eine zum Benutzer hin geneigte Oberseite mit der Aufgabepunkt-Skala auf.

Durch die Neigung der Skala für die Dosiermenge und der Skala für den Aufgabepunkt ergibt sich eine optisch gute Ablesbarkeit für das Einstellen und Überprüfen einer Einstellung.

In weiterhin vorteilhafter Ausgestaltung ist vorgesehen, dass an der Unterseite des Bedienungspanels wenigstens ein Führungsschuh verschiebbar und festsetzbar angeordnet ist, der an seiner dem Formstück zugekehrten Seite eine Führungsrippe aufweist, die in eine Führungsnut am Umfang des Formstücks eingreift.

Mit diesem Führungsschuh wird das Bedienungspanel mit der Verstelleinrichtung zur Einstellung des Aufgabepunktes an dem die Aufgabepunkt-Skala aufweisenden Formstück geführt.

Mit Vorteil ist der Führungsschuh aus einer Position, in der die Führungsrippe wirkungslos ist, in eine Position, in der die Führungsrippe in die Führungsnut eingreift und das Bedienungspanel gegen Kräfte von oben abstützt, verschiebbar und in dieser Position festsetzbar.

Die in der Führungsnut des Formstücks laufende Führungsrippe des Führungsschuhs erfüllt also nicht nur die Führungsfunktion und die Verstelleinrichtung mit dem Bedienungspanel, sondern stützt zugleich das Bedienungspanel gegen von oben wirkende Bedienungskräfte ab.

Mit Vorteil sind die Lagerschuhe für die Dosierplatte zwischen einer wirkungslosen Position und einer die Dosierplatte am behälterfesten Boden drehbar lagernden Position radial verschiebbar und in dieser Position festsetzubar. Auf diese Weise lässt sich die Dosierplatte problemlos an dem festen Behälterboden montieren.

In bevorzugter Ausführung ist vorgesehen, dass die aus Dosierplatte, Dosierschieber und Anschlaghebel bestehende Baueinheit mit dem Bedienungspanel und dieses mit der Dosierplatte verbindenden Flacheisen zu einer größeren Baugruppe zusammengefasst ist, und dass nach Montage des Antriebs zwischen Dosierplatte und Dosierschieber der Anschlagbolzen in den Führungsschlitz am Bedienpanel einführbar ist, und dass zur Montage die gesamte Baugruppe bei gelösten Lagerschuhen und gelöstem Führungsschuh (wirkungslose Position) an den behälterfesten Boden angesetzt und anschließend die Lagerschuhe und der Führungsschuh in ihre Wirklage gebracht und festgesetzt werden.

Durch die Zusammenfassung der Bauteile der Dosiereinrichtung und der Verstelleinrichtung zu einer Baugruppe ist eine besonders einfache und schnelle Montage möglich.

Nachstehend ist die Erfindung anhand eines in der Zeichnung wiedergegebenen Ausführungsbeispiels beschrieben. In der Zeichnung zeigen:

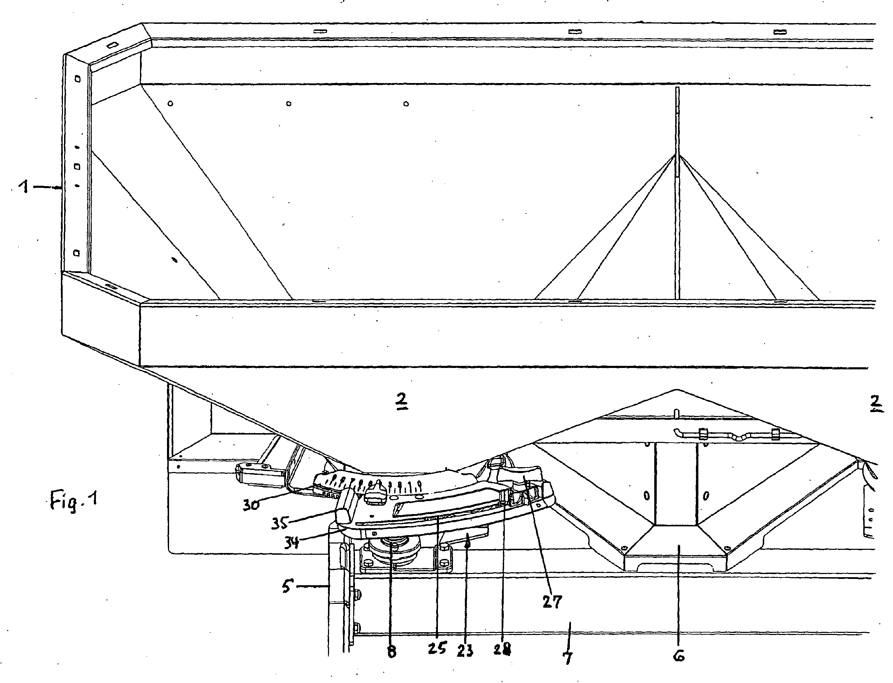

- Fig. 1: eine abgebrochene, perspektivische Ansicht auf die Rückseite eines Zweischeibenstreuers, wobei die Verstelleinrichtung nur auf der linken Behälterseite wiedergegeben ist;
- Fig. 2: eine perspektivische Ansicht von unten auf die Dosiereinrichtung und die Verstelleinrichtung in vergrößertem Maßstab;
- Fig. 3: eine perspektivische Ansicht von oben in das Bodenteil des Behälters in vergrößertem Maßstab;

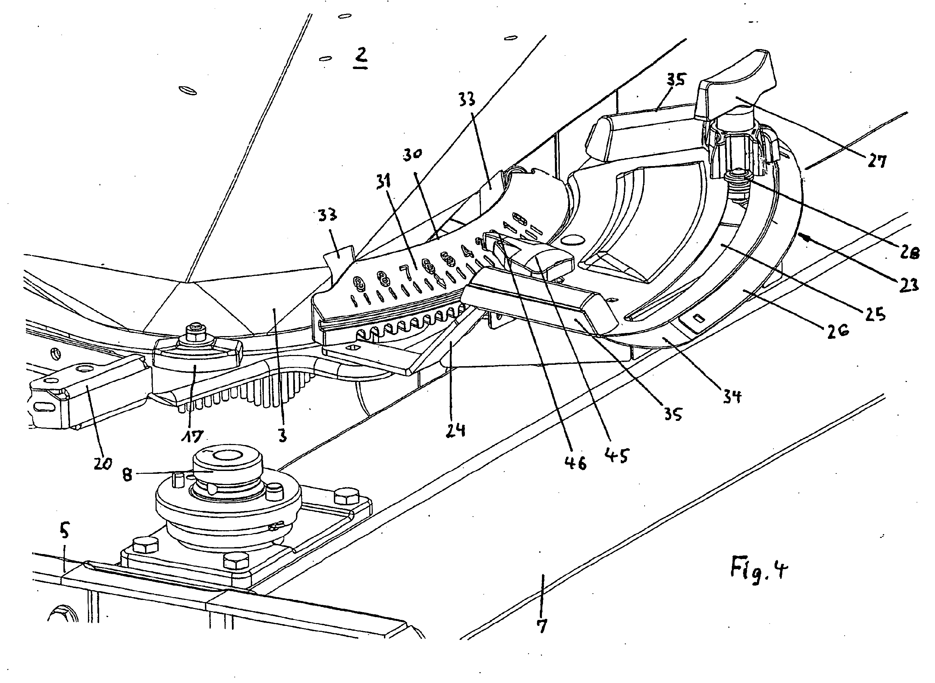

- Fig. 4: eine perspektivische Ansicht auf die Oberseite des Bedienungspanels in vergrößertem Maßstab und
- Fig. 5: eine perspektivische Ansicht des KunststoffFormstücks.

In der Zeichnung ist als Ausführungsbeispiel ein Schleuderstreuer als Zweischeibenstreuer gezeigt, jedoch lässt sich die Erfindung gleichermaßen auf einen Einscheibenstreuer übertragen.

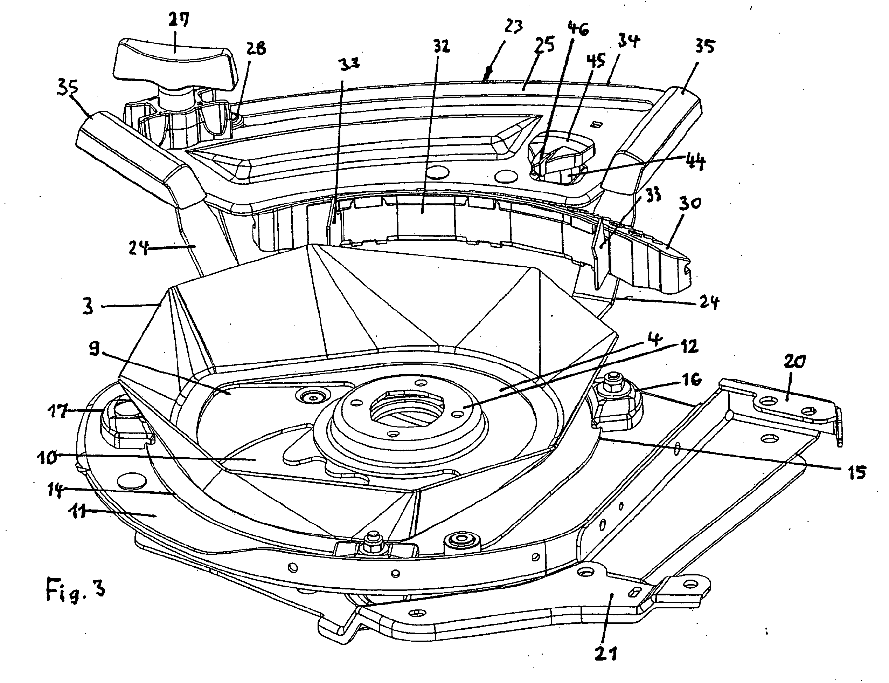

Der Schleuderstreuer weist einen Behälter 1 auf, der sich über je ein trichterförmiges Unterteil 2 zu einem Bodenteil 3 mit einem Boden 4 verjüngt (Fig. 3). Der Behälter 1 ist von einem Rahmen aufgenommen, der aus zwei in Fahrtrichtung nach hinten weisenden Kragarmen 5, einer Mittelkonsole 6 und zwei nicht gezeigten Seitenkonsolen und einer diese verbindenden Querträger besteht. An den Seitenkonsolen befinden sich die Anschlüsse für die Unterlenker und an der Querträgers der Anschluss für den Oberlenker des Dreipunktgestänges eines Traktors.

Die Kragarme 5 sind über eine Quertraverse 7 verbunden, die zugleich das Gehäuse für ein Getriebe mit einer Querwelle aufnimmt, das eingangsseitig an die Zapfwelle eines Traktors anschließbar ist und über endständige Naben 8 je eine nicht gezeigte Verteilerscheibe antreibt, die an ihrer Oberseite mit Wurfschaufeln besetzt sind.

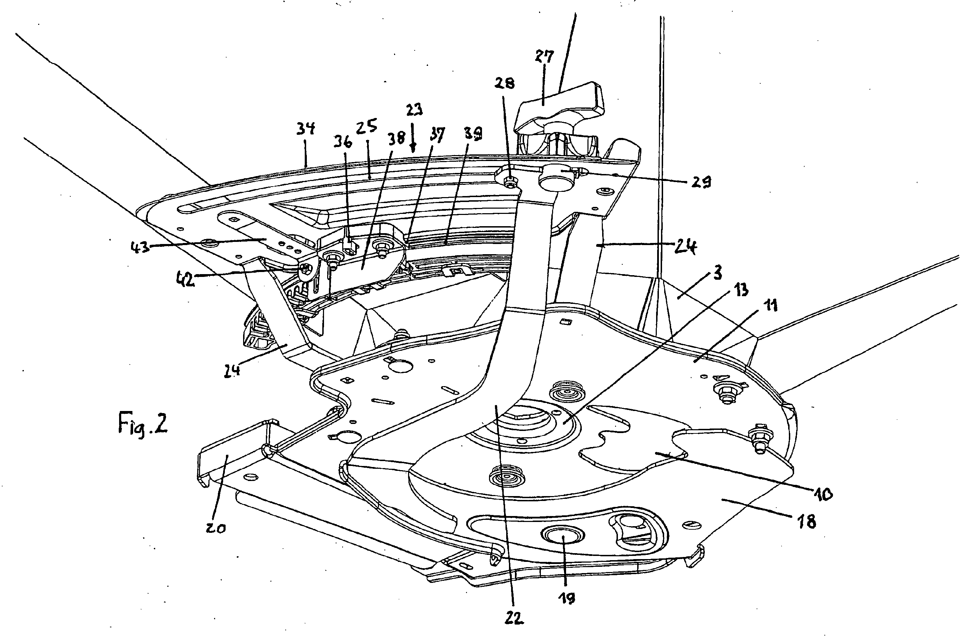

Jeder Boden 4 weist eine großflächige Auslauföffnung 9 (Fig. 3) für den Dünger auf, deren Querschnitt so bemessen ist, dass in Verbindung mit der später beschriebenen Dosiereinrichtung bei jeder Lage des Aufgabepunktes die größte Dosiermenge ausgebracht werden kann. Die Auslauföffnung 9 (Figur 3) wirkt mit einer Dosieröffnung 10 in einer Dosierplatte 11 zusammen, die unterhalb des Bodens angeordnet und an diesem drehbar geführt ist. Zu diesem Zweck weist der Boden 4 einen nach innen eingepressten Topf 12 und die Dosierplatte 11 (Figur 2) einen nach oben ausgepressten Hals 13 auf, der in den Topf 12 von der Unterseite her eingreift und mit diesem eine Art Lager bildet. Ferner weist der Boden 4 an einem das Bodenteil 3 überragenden Kragen einen großen Radius 14 und einen kleineren Radius 15 auf (Figur 3). Im Bereich des kleinen Radius 15 wird der Kragen des Bodens von zwei Lagerschuhen 16 und im Bereich des großen Radius 14 von zwei Lagerschuhen 17, die jeweils auf der Oberseite der Dosierplatte 11 verschiebbar festgelegt sind, übergriffen. Durch diesen Übergriff ist die Dosierplatte 11 in Verbindung mit dem Eingriff des Halses 13 in den Topf 12 des Bodens 4 axial und radial geführt.

Zu der Dosiereinrichtung mit der Dosieröffnung 10 in der Dosierplatte 11 gehört ferner ein Dosierschieber 18, der auf der Unterseite der Dosierplatte 11 (Figur 2) bei 19 schwenkbar gelagert ist. Er wird beispielsweise von einem nicht gezeigten Antrieb betätigt, der an einer mit der Dosierplatte 11 verbundenen Stütze 20 abgestützt ist und auf einen mit dem Dosierschieber 18 verbundenen Arm 21 wirkt. Ein weiterer mit dem Dosierschieber einteiliger Arm 22 wirkt als Anschlaghebel für eine vorwählbare Dosiermenge, wie später beschrieben.

Die Dosierplatte 11 mit der Dosieröffnung 10 und der daran gelagerte Dosierschieber 18 bilden eine Baueinheit, die zur Verlagerung des Aufgabepunktes des Streugutes auf die Verteilerscheibe um die Achse von Lagertopf 12 und Lagerhals 13 der Dosierplatte 11 drehbar ist. Dies geschieht mittels der Verstelleinrichtung 23. Die Verstelleinrichtung weist ein Bedienungspanel 34 auf, das über die mit ihm einteiligen Flacheisen 24 mit der Dosierplatte 11 verbunden ist und sich im wesentlichen horizontal nach außen erstreckt.

Das Bedienungspanel 34 weist einen zum Lager 19 des Dosierschiebers 18 etwa konzentrischen Führungsschlitz 25 auf, in den der Anschlaghebel 22 (Fig. 2) mit einem an seinem oberen Ende angeordneten Führungsbolzen 28 geführt ist. In dem Führungsschlitz 25 ist ferner ein Knebelgriff 27 verschiebbar und festsetzbar geführt, der mit einem Anschlagbolzen 29 für das obere Ende des Anschlaghebels 22 versehen ist (Fig. 2).

Mit dem Knebelgriff 27 wird an der Skala 26 die gewünschte Dosiermenge voreingestellt. Mit dem nicht gezeigten Antrieb, der auf den Hebel 21 des Dosierschiebers wirkt, fährt der Anschlaghebel 22 mit seinem oberen Ende gegen den Anschlagbolzen 29 am Knebelgriff 27, so dass der Dosierschieber 18 den freien Querschnitt der Dosieröffnung 10 im gewünschten Ausmaß verkleinert oder vergrößert.

An dem Behälter 1 ist im Bereich des trichterförmigen Unterteils 2 an der Rückseite des Streuers ein Formstück 30 mit einer Aufgabepunkt-Skala 31 angeordnet, entlang der die Verstelleinrichtung 23 mit der Dosierplatte 11 und dem Dosierschieber 18 um das Drehzentrum verdrehbar ist. Zu diesem Zweck ist das Formstück 30 konzentrisch zum Drehzentrum ausgebildet. Das Formstück 30 ist an einem Tragblech 32 lösbar angebracht, das seinerseits mit dem trichterförmigen Unterteil 2 des Behälters 1 über endständige Laschen 33 verschweißt ist (Fig. 3).

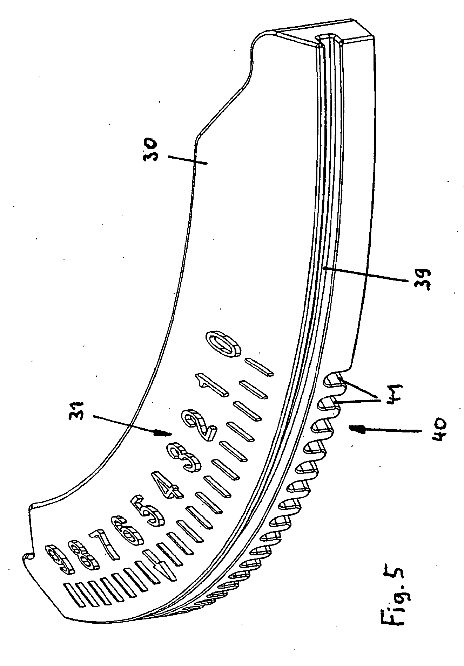

Die Verstelleinrichtung 23 weist ein Bedienungspanel 34 auf, in welchem der Führungsschlitz 25 für die Einstellung der Dosiermenge vorgesehen ist und an deren äußerem Umfang die Skala 26 für die Dosiermenge vorgesehen ist. Das Bedienungspanel weist an seinen beiden Seiten Griffwulste 35 auf, mittels der es um das Formstück 30 mit der Aufgabepunkt-Skala 31 verdreht werden kann. Das Bedienungspanel ist zu diesem Zweck an dem Formstück 30 geführt. Hierzu dient ein Führungsschuh 36 (Fig. 2), der eine Führungsrippe 37 aufweist und in einem Blechhalter 38 verschiebbar geführt und mittels Muttern festsetzbar ist. In der Betriebsstellung des Führungsschuhs 36 greift die Führungsrippe 37 in eine Führungsnut 39 am äußeren Umfang des Formstücks 30 ein (Fig. 2 und 5). An der Unterseite des Formstücks ist eine ausgeformte Rastschiene 40 vorhanden, die zur Einstellung des Bedienungspanels auf den gewünschten Aufgabepunkt dient. Mit den Ausnehmungen 41 der Rastschiene 40 wirkt ein Raststift 42 zusammen, der in einem Schlitz des Blechhalters 38 geführt ist und am abgewinkelten Ende einer Blattfeder 43 sitzt, deren anderes Ende an der Unterseite des Bedienungspanels 34 befestigt ist. Mit dem freien Ende der Blattfeder 43 ist ein im Bedienungspanel 34 geführter Stößel 44 eines Druckknopfs 45 verbunden, der zugleich einen Anzeiger 46 für die Aufgabepunkt-Skala 31 bildet. Durch Betätigen des Druckknopfs kann der Raststift von der Rastschiene freigesetzt werden und die gesamte Verstelleinrichtung mit dem Bedienungspanel 34 über die Flacheisen 24 verdreht werden, wobei die Dosierplatte 11 zusammen mit dem Dosierschieber 18 um das Drehzentrum verdreht werden kann, um einen anderen Aufgabepunkt einzustellen, indem der Druckknopf 45 losgelassen wird, so dass der Raststift 42 in die zugehörige Ausnehmung 41 an der Rastschiene 40 einrastet.

Die aus der Dosierplatte 11, dem Dosierschieber 18 mit dem Lager 19 an der Dosierplatte bestehende Baueinheit wird mit dem Bedienungspanel 34 und den dieses mit der Dosierplatte verbindenden Flacheisen zu einer größeren Baugruppe zusammengefasst. Nach Montage des Antriebs zwischen Dosierplatte 11 und Dosierschieber 18 wird der Anschlaghebel 22 mit dem Anschlagbolzen 28 in den Führungsschlitz am Bedienungspanel 24 eingeführt. Zur Montage wird diese gesamte Baugruppe bei gelösten Lagerschuhen 16, 17 und gelöstem Führungsschuh 36, in der sie sich in der wirkungslosen Position befinden, an den Behälter des Bodens 9 angesetzt und dann die Lagerschuhe 16, 17 im Bereich der Radien 14, 15 über den Kragen 14 des behälterfesten Bodens 9 geschoben und festgesetzt. Ferner wird der Führungsschuh 36 aus der wirkungslosen Position in Richtung auf das Formstück 30 verschoben, bis die Führungsrippe 37 in die Führungsnut 39 an dem Formstück 30 eingreift. Schließlich werden noch der Knebelgriff 27 und der Druckknopf 45 angebracht, so dass die Dosier- und Verstelleinrichtung sich dann im Betriebszustand befinden.

### Bezugszeichenliste

| | | | |
|---|---|---|---|
| 1 | Behälter | 24 | Flacheisen |
| 2 | Unterteil | 25 | Führungsschlitz |
| 3 | Bodenteil | 26 | Dosiermengen-Skala |
| 4 | Boden | 27 | Kurbelgriff |
| 5 | Kragarme | 28 | Führungsbolzen |
| 6 | Mittelkonsole | 29 | Anschlagbolzen |
| 7 | Quertraverse | 30 | Formstück |
| 8 | Nabe | 31 | Aufgabepunkt-Skala |
| 9 | Auslauföffnung | 32 | Tragblech |
| 10 | Dosieröffnung | 33 | Laschen |
| 11 | Dosierplatte | 34 | Bedienungspanel |
| 12 | Lagertopf | 35 | Griffwulst |
| 13 | Lagerhals | 36 | Führungsschuh |
| 14 | großer Radius | 37 | Führungsrippe |
| 15 | kleiner Radius | 38 | Blechhalter |
| 16 | Lagerschuh | 39 | Führungsnut |
| 17 | Lager von 18 | 40 | Rastschiene |
| 18 | Dosierschieber | 41 | Ausnehmungen |
| 19 | Lager von 18 | 42 | Raststift |
| 20 | Stütze von 11 | 43 | Blatthalter |
| 21 | Arm von 18 | 44 | Stößel |
| 22 | Anschlaghebel | 45 | Druckknopf |
| 23 | Verstelleinrichtung | 46 | Anzeiger |

## Patentansprüche

1. Schleuderstreuer für Streugut mit einem Streugut-Behälter (1), der ein sich zu einem Boden verjüngendes trichterförmiges Unterteil (2) und wenigstens eine im Boden (4) angeordnete Auslauföffnung (9) aufweist, mit einer aus einer Dosierplatte (11) mit Dosieröffnung (10) und einem Dosierschieber (18) bestehenden Dosiereinrichtung und einer Verstelleinrichtung (23) für die Dosiereinrichtung (10, 11, 18) zur Verlagerung des Aufgabepunktes des Streuguts auf einer mit Wurfschaufeln besetzten Verteilerscheibe, die unterhalb des Bodens (4) umläuft, **dadurch gekennzeichnet, dass** die Verstelleinrichtung (23) und die Dosiereinrichtung (10, 11, 18) in Wirkverbindung mit einem im wesentlichen horizontalen Bedienungspanel (34) für die Einstellung von Aufgabepunkt und Dosiermenge stehen, das an einer behälterfesten Aufgabepunkt-Skala (30, 31) an der Rückseite des Behälters (1) geführt ist, und dass die Dosierplatte (11) mittels verschiebbarer Lagerschuhe (16, 17) am Umfang des behälterfesten Bodens (4) drehbar gelagert ist.

2. Schleuderstreuer nach Anspruch 1, **dadurch gekennzeichnet, dass** die Dosierplatte (11) und der daran gelagerte Dosierschieber (18) sowie ein mit diesem einteiliger Anschlaghebel (22) für die Dosiermenge eine Baueinheit bilden.

3. Schleuderstreuer nach Anspruch 2, **dadurch gekennzeichnet, dass** der Anschlaghebel (22) mit einem Führungsbolzen (28) an seinem oberen Ende in einem Führungsschlitz (25) des Bedienungspanels (34) geführt ist.

4. Schleuderstreuer nach Anspruch 3, **dadurch gekennzeichnet, dass** in dem kreisbogenförmigen Führungsschlitz (25), dem eine kreisbogenförmige Skala (26) für die Dosiermenge zugeordnet ist, ein festsetzbarer Einstellknopf (27) zur Einstellung der gewünschten Dosiermenge verschiebbar ist, der einen Anschlagbolzen (29) für den Anschlaghebel (22) aufweist.

5. Schleuderstreuer nach einem der Ansprüche 1 bis 4, **dadurch gekennzeichnet, dass** an der Dosierplatte (11) ein Antrieb für den Dosierschieber (18) abgestützt ist.

6. Schleuderstreuer nach einem der Ansprüche 2 bis 5, **dadurch gekennzeichnet, dass** der Antrieb den Dosierschieber (18) soweit um sein Lager (19) an der Dosierplatte (11) dreht, bis der Anschlaghebel (22) an den Anschlagbolzen (29) am Einstellknopf (27) gelangt.

7. Schleuderstreuer nach einem der Ansprüche 1 bis 5, **dadurch gekennzeichnet, dass** das Bedienungspanel (34) über zwei nahe seinen Außenseiten angeordnete, nach unten reichende Flacheisen (24) mit der Dosierplatte (11) verbunden ist.

8. Schleuderstreuer nach Anspruch 8, **dadurch gekennzeichnet, dass** die Flacheisen (24) mit dem Bedienungspanel (34) einteilig sind.

9. Schleuderstreuer nach einem der Ansprüche 1 bis 6, **dadurch gekennzeichnet, dass** die Aufgabepunkt-Skala (31) an einem bogenförmigen Kunststoff-Formstück (30) vorgesehen ist, das an einem am Behälter (1) befestigten Tragblech (32) lösbar festgelegt ist.

10. Schleuderstreuer nach einem der Ansprüche 9, **dadurch gekennzeichnet, dass** das Formstück (30) an seiner Unterseite eine Rastschiene (40) bildet, in deren einzelne Rasten (41) ein unter Federkraft (43) stehender Raststift (42) eingreift, der von der Oberseite des Bedienungspanels (34) zur Einstellung des Aufgabepunktes betätigbar ist.

11. Schleuderstreuer nach Anspruch 10, **dadurch gekennzeichnet, dass** dem Raststift (42) oberhalb des Bedienungspanels (34) ein Druckknopf (45) zugeordnet ist, der zugleich einen mit der Aufgabepunkt-Skala (39) zusammenwirkenden Anzeiger (46) bildet.

12. Schleuderstreuer nach einem Anspruch 1, **dadurch gekennzeichnet, dass** an dem Bedienungspanel (34) eine zum Benutzer hin geneigte Skala (31) für die Dosiermenge vorgesehen ist.

13. Schleuderstreuer nach Anspruch 10, **dadurch gekennzeichnet, dass** das Formstück (30) eine zum Benutzer hin geneigte Oberseite mit der Aufgabepunkt-Skala (31) aufweist.

14. Schleuderstreuer nach einem der Ansprüche 1 bis 13, **dadurch gekennzeichnet, dass** an der Unterseite des Bedienungspanels (34) wenigstens ein Führungsschuh (36) verschiebbar und festsetzbar angeordnet ist, der an seiner dem Formstück (30) zugekehrten Seite eine Führungsrippe (37) aufweist, die in eine Führungsnut (39) am Umfang des Formstücks (30) eingreift.

15. Schleuderstreuer nach einem Anspruch 14, **dadurch gekennzeichnet, dass** der Führungsschuh (36) aus einer Position, in der die Führungsrippe (37) wirkungslos ist, in eine Position, in der die Führungsrippe in die Führungsnut (39) eingreift und das Bedienungspanel (34) gegen Kräfte von oben abstützt, verschiebbar und in dieser Position festsetzbar ist.

16. Schleuderstreuer nach Anspruch 1, **dadurch gekennzeichnet, dass** die Lagerschuhe (16, 17) für die Dosierplatte (11) zwischen einer wirkungslosen Position und einer die Dosierplatte am behälterfesten Boden (4) drehbar lagernden Position radial verschiebbar und in dieser Position festsetzbar sind.

17. Schleuderstreuer nach einem der Ansprüche 1 bis 16, **dadurch gekennzeichnet, dass** die aus Dosierplatte (11), Dosierschieber (18) und Anschlaghebel (22) bestehende Baueinheit mit dem Bedienungspanel (34) und den dieses mit der Dosierplatte verbindenden Flacheisen (24) zu einer größeren Baugruppe zusammengefasst ist und dass nach Montage.des Antriebs zwischen Dosierplatte (11) und Dosierschieber (18) der Führungsbolzen (28) in den Führungsschlitz (25) am Bedienungspanel (34) einführbar ist, und dass zur Montage die gesamte Baugruppe bei gelösten Lagerschuhen (16, 17) und gelöstem Führungsschuh (36) (wirkungslose Position) an den behälterfesten Boden (4) angesetzt und anschließend die Lagerschuhe (16, 17) und der Führungsschuh (36) in ihre Wirklage gebracht und festgesetzt werden.

## Claims

1. Centrifugal spreader for spreading material, having a spreading-material container (1) which has a funnel-shaped bottom part (2), which narrows towards a base, and at least one outlet opening (9) arranged in the base (4), having a metering device consisting of a metering plate (11) having a metering opening (10) and a metering slide (18), and an adjusting device (23) for the metering device (10, 11, 18) for displacing the delivery point of the spreading material on a distribution disc fitted with thrower blades, said distribution disc rotating beneath the base (4), **characterized in that** the adjusting device (23) and the metering device (10, 11, 18) are operatively connected to a substantially horizontal control panel (34) for setting the delivery point and metered quantity, said control panel (34) being guided on a delivery-point scale (30, 31), fixed to the container, on the rear side of the container (1), and **in that** the metering plate (11) is mounted in a rotatable manner by means of displaceable bearing shoes (16, 17) on the circumference of the base (4) fixed to the container.

2. Centrifugal spreader according to Claim 1, **characterized in that** the metering plate (11) and the metering slide (18) mounted thereon and also a stop lever (22), in one piece therewith, for the metered quantity form a structural unit.

3. Centrifugal spreader according to Claim 2, **characterized in that** the stop lever (22) is guided, by way of a guide bolt (28) at its upper end, in a guide slot (25) in the control panel (34).

4. Centrifugal spreader according to Claim 3, **characterized in that** a fixable setting knob (27) for setting the desired metered quantity is displaceable in the guide slot (25), in the form of a circular arc, to which a scale (26), in the form of a circular arc, for the metered quantity is assigned, said setting knob (27) having a stop bolt (29) for the stop lever (22).

5. Centrifugal spreader according to one of Claims 1 to 4, **characterized in that** a drive for the metering slide (18) is supported on the metering plate (11).

6. Centrifugal spreader according to one of Claims 2 to 5, **characterized in that** the drive rotates the metering slide (18) about its bearing (19) on the metering plate (11) until the stop lever (22) arrives at the stop bolt (29) on the setting knob (27).

7. Centrifugal spreader according to one of Claims 1 to 5, **characterized in that** the control panel (34) is connected to the metering plate (11) via two downwardly extending flat bars (24) that are arranged close to its outer sides.

8. Centrifugal spreader according to Claim 8, **characterized in that** the flat bars (24) are in one piece with the control panel (34).

9. Centrifugal spreader according to one of Claims 1 to 6, **characterized in that** the delivery-point scale (31) is provided on an arcuate plastics shaped piece (30) which is releasably fastened to a mounting plate (32) secured to the container (1).

10. Centrifugal spreader according to Claim 9, **characterized in that** the shaped piece (30) forms on its underside a latch bar (40), in the individual latches (41) of which a latch pin (42) that is under spring force (43) engages, said latch pin (42) being actuable from the top side of the control panel (34) to set the delivery point.

11. Centrifugal spreader according to Claim 10, **characterized in that** a push button (45) is assigned to the latch pin (42) above the control panel (34), said push button (45) at the same time forming a pointer (46) interacting with the delivery-point scale (39).

12. Centrifugal spreader according to Claim 1, **characterized in that** a scale (31), inclined towards the user, for the metered quantity is provided on the control panel (34).

13. Centrifugal spreader according to Claim 10, **characterized in that** the shaped piece (30) has a top side, inclined towards the user, having the delivery-point scale (31).

14. Centrifugal spreader according to one of Claims 1 to 13, **characterized in that** at least one guide shoe (36) is arranged in a displaceable and fixable manner on the underside of the control panel (34), said guide shoe (36) having on its side facing the shaped piece (30) a guide rib (37) which engages in a guide groove (39) on the periphery of the shaped piece (30).

15. Centrifugal spreader according to Claim 14, **characterized in that** the guide shoe (36) is displaceable from a position in which the guide rib (37) is inoperative into a position in which the guide rib engages in the guide groove (39) and supports the control panel (34) with respect to forces from above, and is fixable in this position.

16. Centrifugal spreader according to Claim 1, **characterized in that** the bearing shoes (16, 17) for the metering plate (11) are radially displaceable between an inoperative position and a position mounting the metering plate in a rotatable manner on the base (4) fixed to the container, and are fixable in this position.

17. Centrifugal spreader according to one of Claims 1 to 16, **characterized in that** the structural unit consisting of the metering plate (11), the metering slide (18) and the stop lever (22) is assembled, together with the control panel (34) and the flat bars (24) connecting the latter to the metering plate, to form a larger assembly, and **in that**, after the drive has been installed between the metering plate (11) and the metering slide (18), the guide bolt (28) is introducible into the guide slot (25) on the control panel (34), and **in that**, for installation purposes, the entire assembly is placed, with the bearing shoes (16, 17) released and the guide shoe (36) released (inoperative position), against the base (4) fixed to the container, and subsequently the bearing shoes (16, 17) and the guide shoe (36) are moved into their operative position and fixed.

## Revendications

1. Épandeur centrifuge de matériau d'épandage doté d'un réservoir de matériau d'épandage (1) comportant une partie inférieure (2) se rétrécissant en forme d'entonnoir en direction d'un fond et au moins une ouverture d'évacuation (9) disposée dans le fond (4), avec un dispositif de dosage composé d'une plaque de dosage (11) pourvue d'une ouverture de dosage (10) et d'un piston-poussoir de dosage (18) ainsi que d'un dispositif de réglage (23), en vue de permettre au dispositif de dosage (10, 11, 18) de déplacer le point cible du matériau d'épandage sur un disque de répartiteur pourvu de boucles éjectrices tournant en dessous du fond (4), **caractérisé en ce que** le dispositif de réglage (23) et le dispositif de dosage (10, 11, 18) sont en liaison active avec un panneau de commande (34) pour l'essentiel horizontal prévu pour régler le point cible et la quantité de dosage, ledit panneau étant guidé au niveau d'une échelle de point cible (30, 31) fixe par rapport au réservoir prévue au niveau du côté arrière du réservoir (1), et que la plaque de dosage (11) est disposée de façon à pouvoir pivoter sur la circonférence du fond (4) fixe par rapport au réservoir à l'aide de patins de palier de roulement (16, 17) mobiles.

2. Épandeur centrifuge selon la revendication 1, **caractérisé en ce que** la plaque de dosage (11) et le piston-poussoir de dosage (18) disposé contre ainsi qu'un levier de butée (22) réalisé d'un seul tenant avec ce dernier pour évaluer la quantité de dosage forment une unité de construction.

3. Épandeur centrifuge selon la revendication 2, **caractérisé en ce que** le levier de butée (22) est guidé dans une fente de guidage (25) du panneau de commande (34) au moyen d'un boulon de guidage (28) prévu au niveau de son extrémité supérieure.

4. Épandeur centrifuge selon la revendication 3, **caractérisé en ce qu'**un bouton de réglage (27) pouvant être fixé pour régler la quantité de dosage souhaitée peut être déplacé dans la fente de guidage (25) en forme d'arc de cercle à laquelle est associée une échelle (26) en forme d'arc de cercle prévue pour déterminer la quantité de dosage, ladite fente comportant un boulon de butée (29) prévu pour le levier de butée (22).

5. Épandeur centrifuge selon l'une quelconque des revendications 1 à 4, **caractérisé en ce qu'**un entraînement prévu pour le piston-poussoir de dosage (18) est maintenu contre la plaque de dosage (11).

6. Épandeur centrifuge selon l'une quelconque des revendications 2 à 5, **caractérisé en ce que** l'entraînement fait pivoter le piston-poussoir de dosage (18) autour de son palier de roulement (19) prévu au niveau de la plaque de dosage (11) jusqu'à ce que le levier de butée (22) parvienne contre le boulon de butée (29) prévu au niveau du bouton de réglage (27).

7. Épandeur centrifuge selon l'une quelconque des revendications 1 à 5, **caractérisé en ce que** le panneau de commande (34) est relié à la plaque de dosage (11) par le biais de deux éléments en fer plats (24) disposés à proximité de ses côtés extérieurs et orientés vers le bas.

8. Épandeur centrifuge selon la revendication 8, **caractérisé en ce que** les éléments en fer plats (24) sont réalisés d'un seul tenant avec le panneau de commande (34).

9. Épandeur centrifuge selon l'une quelconque des revendications 1 à 6, **caractérisé en ce que** l'échelle de point cible (31) est prévue au niveau d'une pièce moulée en plastique (30) fixée de façon amovible à une tôle portante (32) fixée au réservoir (1).

10. Épandeur centrifuge selon la revendication 9, **caractérisé en ce que** la pièce moulée (30) forme au niveau de son côté inférieur un rail d'arrêt (40) dans lequel des systèmes d'arrêt (41) individuels engrènent un pointeau d'arrêt (42) placé sous la force de ressort (43) et pouvant être actionné depuis le côté supérieur du panneau de commande (34) pour régler le point cible.

11. Épandeur centrifuge selon la revendication 10, **caractérisé en ce qu'**un bouton-pression (45) est associé au pointeau d'arrêt (42) placé sur le panneau de commande (34), ledit bouton-pression formant simultanément un pointeur (46) interagissant avec l'échelle de point cible (39).

12. Épandeur centrifuge selon la revendication 1, **caractérisé en ce qu'**une échelle (31) permettant de déterminer la quantité de dosage orientée vers l'utilisateur est prévue au niveau du panneau de commande (34).

13. Épandeur centrifuge selon la revendication 10, **caractérisé en ce que** la pièce moulée (30) comporte un côté supérieur orienté vers l'utilisateur pourvu de l'échelle de point cible (31).

14. Épandeur centrifuge selon l'une quelconque des revendications 1 à 13, **caractérisé en ce qu'**au moins un patin de guidage (36) est disposé de façon à pouvoir être déplacé et maintenu fixement au niveau du côté inférieur du panneau de commande (34), ledit patin comportant au niveau de son côté orienté vers la pièce moulée (30) une nervure de guidage (37) s'emboîtant dans l'encoche de guidage (39) prévue au niveau de la circonférence de la pièce moulée (30).

15. Épandeur centrifuge selon la revendication 14, **caractérisé en ce que** le patin de guidage (36) peut être déplacé d'une position dans laquelle la nervure de guidage (37) est inactive dans une position dans laquelle la nervure de guidage s'emboîte dans l'encoche de guidage (39) et dans laquelle le panneau de commande (34) est maintenu par en haut à l'encontre de certaines forces et peut être maintenu fixement dans cette position.

16. Épandeur centrifuge selon la revendication 1, **caractérisé en ce que** les patins de palier de roulement (16, 17) prévus pour la plaque de dosage (11) peuvent être déplacés dans le plan radial entre une position inactive et une position maintenant la plaque de dosage au niveau du fond (4) fixe par rapport au réservoir et être maintenus fixement dans cette position.

17. Épandeur centrifuge selon l'une quelconque des revendications 1 à 16, **caractérisé en ce que** l'unité de construction composée de la plaque de dosage (11), du piston-poussoir de dosage (18) et du levier de butée (22) est assemblée au panneau de commande (34) et aux éléments en fer plats (24) reliant ce dernier à la plaque de dosage pour former un module de construction plus important et qu'après le montage de l'entraînement entre la plaque de dosage (11) et le piston-poussoir de dosage (18), le boulon de guidage (28) peut être introduit dans la fente de guidage (25) au niveau du panneau de commande (34) et que pour le montage, la totalité du module de construction est placée contre le fond (4) fixe par rapport au réservoir avec les patins de palier de roulement (16, 17) desserrés et le patin de guidage (36) desserré (position inactive) puis que les patins de palier de roulement (16, 17) et le patin de guidage (36) sont amenés dans leur position active avant d'y être maintenus fixement.
